# EUROPEAN PATENT SPECIFICATION

(11) **EP 4 105 109 B1**
(45) Date of publication and mention of the grant of the patent: **27.12.2023**
(21) Application number: 22173993.1
(22) Date of filing: 18.05.2022
(51) Int. Cl.: B62D 25/16, B62D 25/18

(54) **MUDGUARD UNIT FOR MOTOR VEHICLES**
KOTFLÜGELEINHEIT FÜR KRAFTFAHRZEUGE
UNITÉ DE GARDE-BOUE POUR VÉHICULES À MOTEUR

(30) Priority: 16.06.2021 IT 202100015761
(43) Date of publication of application: 21.12.2022
(73) Proprietor: DOMAR S.p.A., 70022 Altamura, Bari (IT)
(72) Inventor: FIORE, Pasquale, I-70022 Altamura, BARI (IT)
(74) Representative: Mitola, Marco

(56) References cited:
- EP-A1- 1 020 346
- EP-A1- 3 680 152
- WO-A1-2004/056640
- US-A- 3 804 542
- US-A- 4 148 373

## Description

### FIELD OF APPLICATION

The present invention relates to a mudguard unit for freight vehicles, e.g., such as trucks, lorries, trailers and the like.

### BACKGROUND ART

It is known that, in the motor vehicle industry, the rear wheels are provided with mudguards made of sheet metal or rigid plastic material, fixed to the chassis by means of ring supports fastened by means of screws or bolts onto appropriate, elongated, solid or hollow elements integral with the chassis.

The mudguards of known solutions are installed by screwing the respective supports, typically tubular rods, onto the mudguards and then tightening the supports to the vehicle chassis.

These assembly steps are slow and complex, above all if they are done manually, without the help of automatic tools, e.g., such as electric screwdrivers.

Furthermore, with the current solutions, the disassembly operations that must be carried out, for example, if a wheel needs to be replaced on the road are particularly complicated; indeed, in situations like these in which the tools of a tire shop are not available, it is essential to be able to facilitate maintenance operations as much as possible. For this purpose, since there is little space between the wheel and the mudguard, it may be advantageous to be able to remove the mudguard to replace the tire more easily. Solutions according to prior art are disclosed, for example, by US 4148373 A. This document discloses a mudguard unit comprising: a mudguard having the shape of an arc of a circle around a transversal axis, parallel to a thickness or depth of an associated vehicle wheel, the mudguard having at least one fixing seat, parallel to said transversal axis; at least one support rod, parallel to said transversal axis, and at least partially housed in said fixing seat. The support rod extends from a distal end, at which it is fixed to the mudguard, to a proximal end at which it is fixed to the chassis of an associated vehicle. At the proximal end, a bolt is provided having a head and a threaded shank for attachment to a hole in the chassis of an associable vehicle. A locking washer is integrally associated at the head of the bolt having a circular body.

Therefore, the assembly and disassembly operations of the mudguard need to be quick and easy.

Furthermore, the need is felt in the industry to reduce the weight and overall cost of manufacturing and assembling the mudguard unit, compared with the solutions of the prior art.

### PRESENTATION OF THE INVENTION

Therefore, the need is felt to solve the drawbacks and limitations mentioned above with reference to the prior art.

Said need is met by a mudguard unit comprising according to claim 1.

### DESCRIPTION OF THE DRAWINGS

Further features and advantages of the present invention will become more comprehensible from the following description of preferred embodiments thereof, given by way of non-limiting examples, in which:

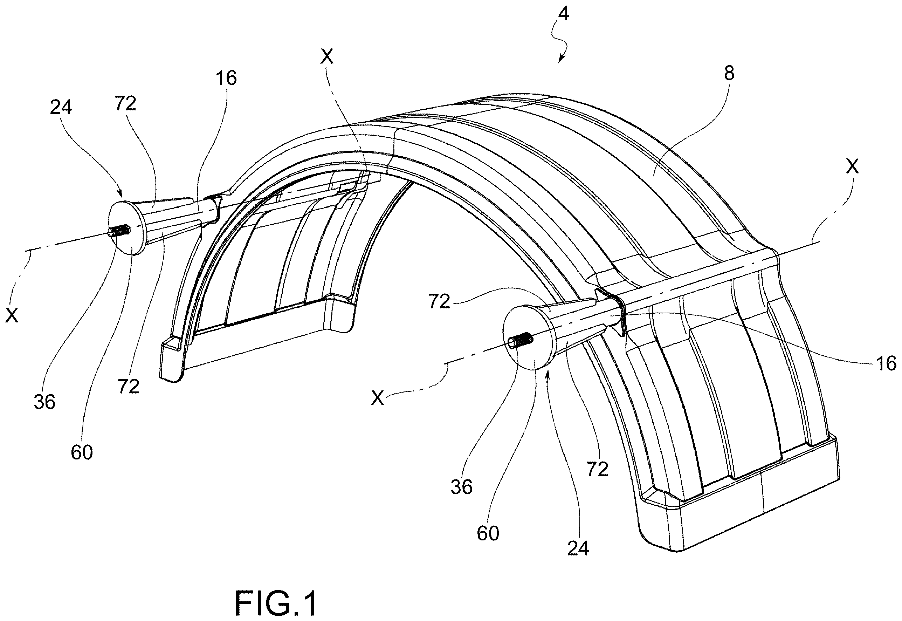

figure 1 is a perspective view from the inner side, facing towards the chassis of an associable vehicle, of a mudguard unit according to a possible embodiment of the present invention;

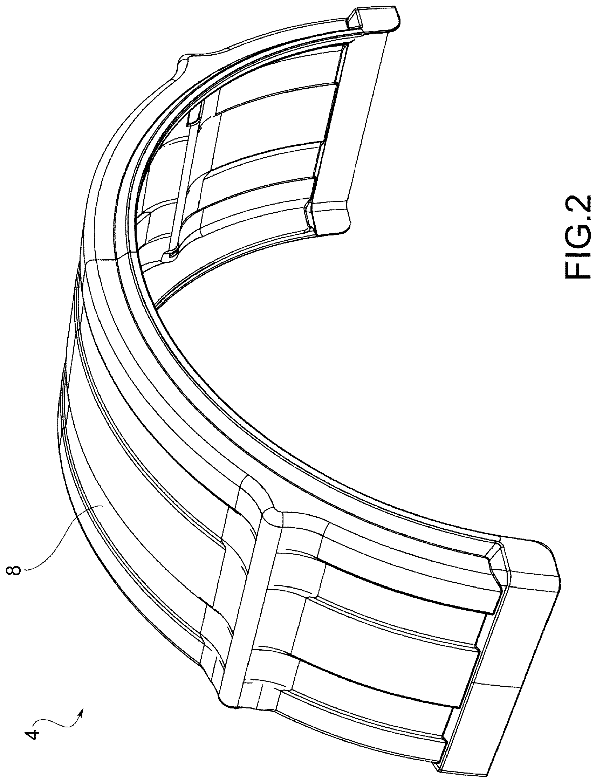

figure 2 is a perspective view of the mudguard unit in figure 1, from an outer side of the vehicle, opposite to said inner side;
figure 3 is a perspective view of the mudguard unit in figure 1 in a partially exploded view configuration;

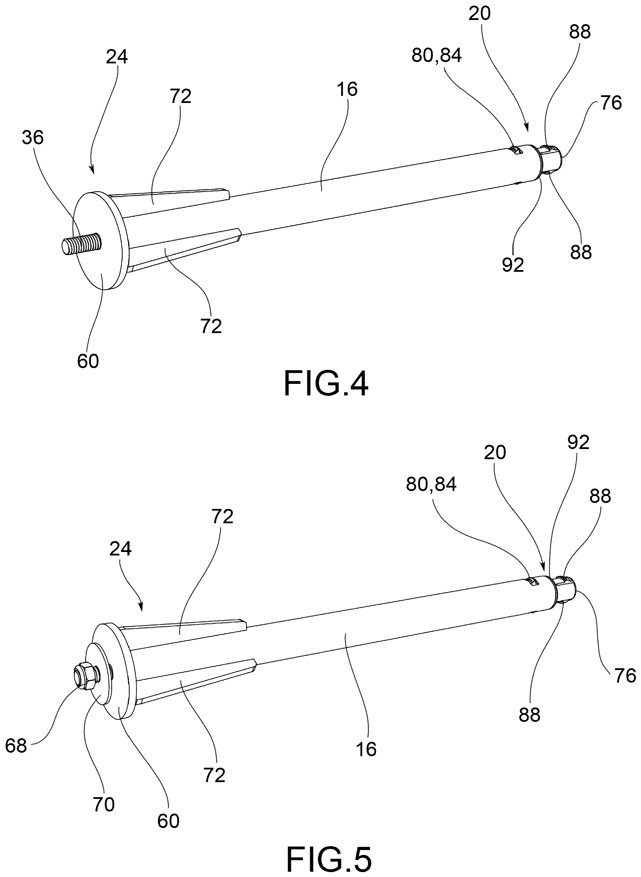

figure 4 is an enlarged perspective view of the detail IV indicated in figure 3;
figure 5 is a perspective view of the detail in figure 4, with the addition of a washer and nut for fixing the associable vehicle to the chassis;

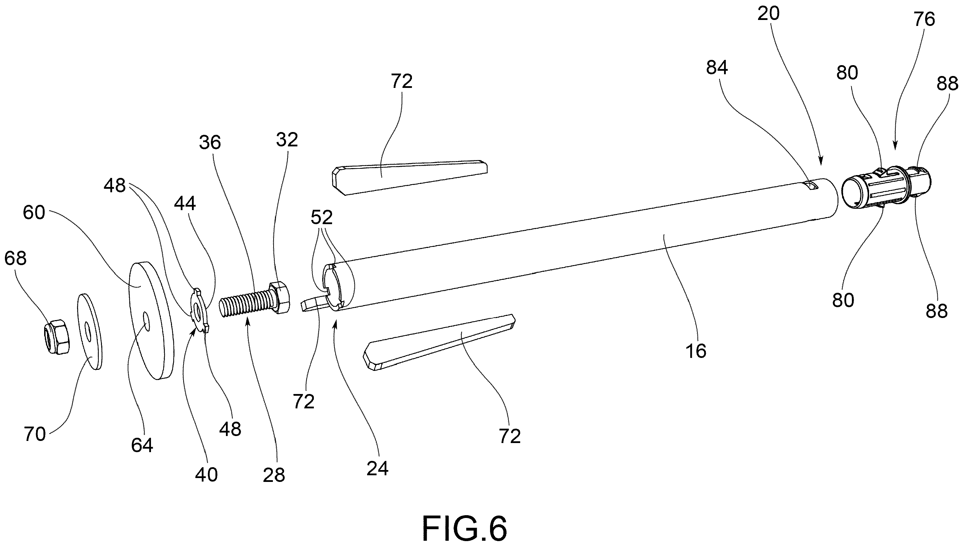

figure 6 is an exploded perspective view of the detail in figure 5.

The elements or parts of elements common to the embodiments described below will be indicated using the same reference numerals.

### DETAILED DESCRIPTION

With reference to the aforesaid figures, reference numeral 4 indicates a mudguard unit as a whole.

The mudguard unit 4 comprises a mudguard 8 having the shape of an arc of a circle around a transversal axis X-X, parallel to a thickness or depth of an associable vehicle wheel (not shown).

The mudguard can be made of any material, preferably a plastic material.

The mudguard 4 has at least one hollow fixing seat 12 parallel to said transversal axis X-X.

The mudguard unit 4 comprises at least one support rod 16, parallel to said transversal axis X-X, and at least partially housed in said fixing seat 12.

Preferably, but not exclusively, said at least one support rod 16 has circular geometry with respect to a plane of a section perpendicular to said transversal axis X-X.

The support rod 16 extends from a distal end 20, at which it is fixed to the mudguard 8, to a proximal end 24, at which it is fixed to the chassis of an associable vehicle (not shown).

Said support rod 16 is preferably made of aluminum or an alloy thereof.

Said support rod 16 is preferably hollow.

A bolt (28) is provided at the proximal end (24) having a head (32) and a threaded shank (36) for fixing into a hole in the chassis of an associable vehicle.

Advantageously, a locking washer 40 having a circular body 44 provided with at least one appendage 48, which engages on a corresponding slot 52 on the proximal end 24 of the support rod 16 is integrally associated with the head 32 of the bolt 28 to join solidly the bolt 28 and the proximal end 24 of the support rod 16 itself.

Preferably, the coupling between the at least one appendage 48 and the corresponding slot 52 is an interlocking coupling.

According to an embodiment, said appendage 48 has a radial extension prevailing over the circular body 44 of the locking washer 40.

According to an embodiment, the slot 52 is made on a frontal portion 56 of the proximal end 24.

Preferably, the locking washer 40 comprises a plurality of appendages 48, which engage by interlocking in corresponding slots 52 of the proximal end 24.

For example, but not exclusively, there are three appendages 48 and three corresponding slots 52, equally spaced at an angle to each other by 120 degrees on a support rod 16 with a circular cross-section.

Preferably, the bolt 28 and said locking washer 40 are made of iron or steel.

Preferably, the bolt 28 and locking washer are made of the same material and are welded together.

A fixing base 60, to an associable vehicle chassis, is associated with the threaded shank 36 of the bolt 28, on the part opposite to the head 32, provided with a through-hole 64 for the threaded shank 36 of the bolt 28 and at least one locking nut 68, preferably provided with a respective backing washer 70.

The support rod 16, on the proximal end side 24, is associated with at least one reinforcing rib 72, directed radially with respect to the bolt 28.

Preferably, said at least one reinforcing rib 72 is aligned with respect to said at least one appendage 48.

The reinforcing rib 72 is welded to the support rod 16 and a fixing base 60 for the bolt 28 provided with a through-hole 64 through the threaded shank 36 of the bolt 28.

According to an embodiment, the support rod 16, at said distal end 20, comprises an elastic head 76, elastically deformable so as to achieve a positive coupling with the fixing seat 12 of the mudguard 8.

According to an embodiment, said elastic head 76 is shaped so as to make a snap-fit coupling with said fixing seat 12.

According to an embodiment, the elastic head 76 comprises elastically deformable first fins 80 for fixing the elastic head 76 in respective holes 84 made on the support rod 16.

According to an embodiment, the elastic head 76 comprises elastically deformable second fins 88 for the undercut locking of the elastic head 76 onto a base plate 92 of the mudguard 8 which delimits said fixing seat 12.

The assembly/disassembly operation of the mudguard unit according to the present invention will now be described.

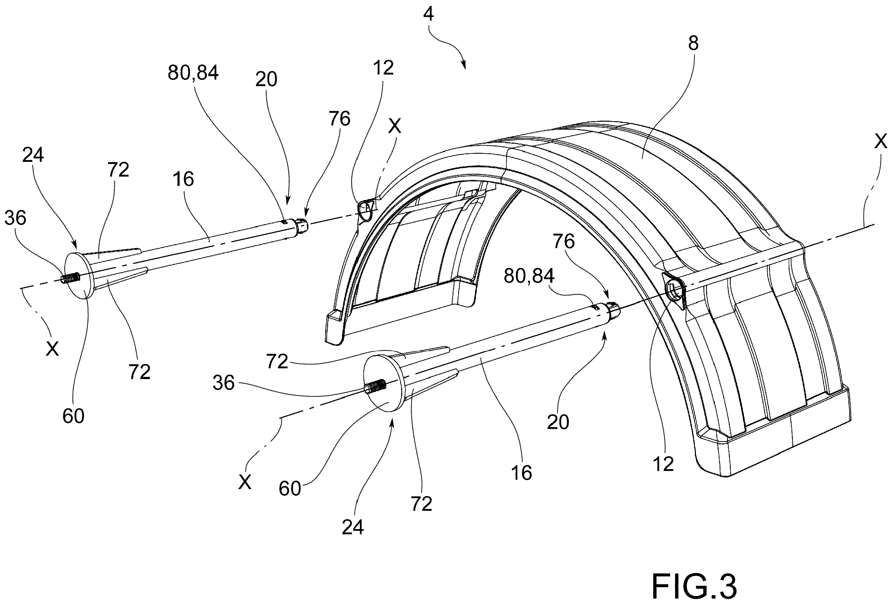

Specifically, the support rod 16, once pre-assembled (figure 3), can be fixed to the vehicle chassis (not shown) by interposing the backing washer 70 and locking nut from the inside of the chassis (not shown).

In this manner, the support rod 16 can be fixed to the chassis by a single operator who simply needs to insert the threaded shank 36 into the appropriate seat in the chassis and lock it by means of locking nut 68 and its backing washer 70.

Then the mudguard 8 can be attached to the support rod 16 by simply inserting the fixing seat 12 of the mudguard 8 from the side of the distal end 20 provided with the elastic head 76.

Said insertion results in elastic flexing of the second fins 88, which create an undercut snap-fit coupling with the base plate 92 of the mudguard 8.

As can be appreciated from the description above, the solutions described make it possible to overcome the drawbacks presented in the prior art.

In particular, the mudguard unit according to the present invention makes it possible to be assembled and disassembled extremely quickly.

Said speed is due to the threaded coupling for fixing the support to the vehicle chassis and the snap-fit quick coupling, which makes it possible to constrain the mudguard to the support tube and then disassemble it.

Furthermore, the solution of the present invention is extremely light. Indeed, the aluminum support tube is significantly lighter than the steel tube of the prior art.

Furthermore, additional lightness is achieved by virtue of the quick coupling, which makes it possible to avoid the use of further supports to couple the mudguard to the tube.

Furthermore, the solution of the present invention is extremely strong and robust; indeed, the aluminum tube is fixed to the chassis by means of an iron or steel screw with a respective special washer made of the same material specially shaped to be interlocked into the seats made in the aluminum tube.

Therefore, there is no welding between the aluminum and iron/steel and, at the same time, the light-weight of aluminum is taken advantage of for the tube (which is the element of larger size and, therefore, greater mass) and the high strength of steel is limited only to the threaded coupling element to the chassis.

Furthermore, the support of the present invention compared to known solutions has the advantage of not requiring the use of a long wrench to be inserted internally along the length of the tube to tighten the screw on the chassis, which would require two operators.

In contrast, the assembly operations of the mudguard unit of the present invention can be carried out by a single operator, thus very quickly, by virtue of the connection screw to the chassis already present on one end of the bracket.

The same applies to the fixing/disassembly of the mudguard with respect to the bracket, which can be achieved by snap-fit couplings.

A person skilled in the art can make numerous changes and variants to the solutions described above.

The scope of protection of the invention is defined by the following claims.

## Claims

1. A mudguard unit (4) comprising:
- a mudguard (8) having the shape of an arc of a circle around a transversal axis (X-X), parallel to a thickness or depth of an associated vehicle wheel,
- the mudguard (8) having at least one fixing seat (12), hollow and parallel to said transversal axis (X-X),
- at least one support rod (16), parallel to said transversal axis (X-X), and at least partially housed in said fixing seat (12),
- the support rod (16) extending from a distal end (20), at which it is fixed to the mudguard (8), to a proximal end (24) at which it is fixed to the chassis of an associated vehicle,
- wherein, at the proximal end (24), a bolt (28) is provided having a head (32) and a threaded shank (36) for attachment to a hole in the chassis of an associable vehicle,
- wherein a locking washer (40) is integrally associated at the head (32) of the bolt (32) having a circular body (44) provided with at least one appendage (48) which engages on a corresponding slot (52) on the proximal end (24) of the support rod (16), so as to solidly join the bolt (28) and the proximal end (24) to each other, wherein a fixing base (60) to an associable vehicle chassis provided with a through hole (64) for the threaded shank (36) of the bolt (28) and at least one locking nut (68), is joined to the threaded shank (36) of the bolt (28), opposite the head (32),
wherein the support rod (16), on the proximal end side (24), is joined to at least one reinforcing rib (72), directed radially with respect to the bolt (28),
wherein said reinforcing rib (72) is welded to the support rod (16) and to a fixing base (60) for the bolt (28), provided with a through hole (64) through the threaded shank (36) of the bolt (28).

2. The mudguard unit (4) according to claim 1, wherein the coupling between the at least one appendage (48) and the corresponding slot (52) is an interlocking coupling.

3. The mudguard unit (4) according to claim 1 or 2, wherein said at least one appendage (48) has a radial extension prevailing with respect to the circular body (44) of the locking washer (40).

4. The mudguard unit (4) according to claim 1, 2 or 3, wherein said slot (52) is made on a front portion (56) of the proximal end (24) of the support rod (16).

5. The mudguard unit (4) according to claim 1, 2, 3 or 4, wherein said locking washer (40) comprises a plurality of appendages (48) which engage by interlocking in corresponding slots (52) of the proximal end (24).

6. The mudguard unit (4) according to any of the claims from 1 to 5, wherein said bolt (28) and said locking washer (40) are made of iron or steel.

7. The mudguard unit (4) according to any of the claims from 1 to 6, wherein said bolt (28) and said locking washer (40) are welded to each other.

8. The mudguard unit (4) according to any of the claims from 1 to 7, wherein said support rod (16) is made of aluminium or an alloy thereof.

9. The mudguard unit (4) according to any one of previous claims, wherein said at least one reinforcing rib (72) is aligned with respect to said at least one appendage (48).

10. The mudguard group (4) according to any of the claims from 1 to 9, wherein the support rod (16), at said distal end (20), comprises an elastic head (76), elastically deformable so as to achieve a shape coupling with the fixing seat (12) of the mudguard (8).

11. The mudguard unit (4) according to claim 10, wherein said elastic head (76) is shaped so as to realize a snap fit coupling with said fixing seat (12).

12. The mudguard unit (4) according to claim 10 or 11, wherein the elastic head (76) comprises elastically deformable first fins (80) for fixing the elastic head (76) on relative holes (84) made on the support rod (16).

13. The mudguard unit (4) according to claim 10, 11 or 12, wherein said elastic head (76) comprises elastically deformable second fins (88) for the undercut locking of the elastic head (76) onto a base plate (92) of the mudguard (8) delimiting said fixing seat (12).

## Patentansprüche

1. Eine Kotflügeleinheit (4), die Folgendes umfasst:
- einen Kotflügel (8), der die Form eines Kreisbogens um eine Querachse (X-X) hat, die parallel zu einer Dicke oder Tiefe eines zugehörigen Fahrzeugrades verläuft,
- wobei der Kotflügel (8) mindestens einen hohlen und zur genannten Querachse (X-X) parallelen Aufnahme- bzw. Befestigungssitz (*fixing seat*) (12) aufweist,
- mindestens eine Stützstange (16), die parallel zur genannten Querachse (X-X) verläuft und zumindest teilweise im genannten Befestigungssitz (12) untergebracht ist,
- wobei sich die Stützstange (16) von einem distalen Ende (20), an dem sie am Kotflügel (8) befestigt ist, zu einem proximalen Ende (24) verläuft, an dem sie am Fahrgestell eines zugehörigen Fahrzeugs befestigt ist,
- wobei am proximalen Ende (24) eine Schraube (28) mit einem Kopf (32) und einem Gewindeschaft (36) zur Befestigung an einem Loch im Fahrgestell eines zugehörigen Fahrzeugs vorgesehen ist,
- wobei am Kopf (32) der Schraube (32) ein Sicherungsring (40) einstückig zugeordnet ist, der einen kreisförmigen Körper (44) aufweist, der mit mindestens einem Fortsatz (48) versehen ist, der in einen entsprechenden Schlitz (52) am proximalen Ende (24) der Stützstange (16) eingreift, um die Schraube (28) und das proximale Ende (24) fest miteinander zusammenzufügen,
wobei ein Befestigungssockel (60) an einem zuordenbaren Fahrgestell, der mit einem Durchgangsloch (64) für den Gewindeschaft (36) der Schraube (28) und mindestens eine Sicherungsmutter (68) versehen ist, mit dem Gewindeschaft (36) der Schraube (28) gegenüber dem Kopf (32) zusammengefügt ist,
wobei die Stützstange (16) an der Seite (24) des proximalen Endes mit mindestens einer Verstärkungsrippe (72) verbunden ist, die relativ zur Schraube (28) radial ausgerichtet ist,
wobei die genannte Verstärkungsrippe (72) an die Stützstange (16) und an einen Befestigungssockel (60) für die Schraube (28) geschweißt ist, die mit einem Durchgangsloch (64) durch den Gewindeschaft (36) der Schraube (28) versehen ist.

2. Die Kotflügeleinheit (4) nach Anspruch 1, wobei die Kopplung zwischen dem mindestens einen Fortsatz (48) und dem entsprechenden Schlitz (52) eine ineinandergreifende Kopplung bzw. Verriegelungskupplung ist.

3. Die Kotflügeleinheit (4) nach Anspruch 1 oder 2, wobei der genannte mindestens eine Fortsatz (48) eine radiale Ausdehnung aufweist, die in Bezug auf den kreisförmigen Körper (44) des Sicherungsrings (40) vorherrscht (*prevailing*)*.*

4. Die Kotflügeleinheit (4) nach Anspruch 1, 2 oder 3, wobei der genannte Schlitz (52) an einem vorderen Abschnitt (56) des proximalen Endes (24) der Stützstange (16) ausgebildet ist.

5. Die Kotflügeleinheit (4) nach Anspruch 1, 2, 3 oder 4, wobei der genannte Sicherungsring (40) eine Vielzahl von Fortsätzen (48) umfasst, die durch Ineinandergreifen in entsprechende Schlitze (52) des proximalen Endes (24) eingreifen.

6. Die Kotflügeleinheit (4) nach irgendeinem der Ansprüche von 1 bis 5, wobei die genannte Schraube (28) und der genannte Sicherungsring (40) aus Eisen oder Stahl hergestellt sind.

7. Die Kotflügeleinheit (4) nach irgendeinem der Ansprüche von 1 bis 6, wobei die genannte Schraube (28) und der genannte Sicherungsring (40) miteinander verschweißt sind.

8. Die Kotflügeleinheit (4) nach irgendeinem der Ansprüche von 1 bis 7, wobei die genannte Stützstange (16) aus Aluminium oder einer Legierung davon hergestellt ist.

9. Die Kotflügeleinheit (4) nach irgendeinem der vorstehenden Ansprüche, wobei die genannte mindestens eine Verstärkungsrippe (72) in Bezug auf den genannten mindestens einen Fortsatz (48) ausgerichtet ist.

10. Die Kotflügelgruppe (4) nach irgendeinem der Ansprüche von 1 bis 9, wobei die Stützstange (16) am genannten distalen Ende (20) einen elastischen Kopf (76) umfasst, der elastisch verformbar ist, um eine formschlüssige Verbindung mit dem Befestigungssitz (12) des Kotflügels (8) zu erreichen.

11. Die Kotflügeleinheit (4) nach Anspruch 10, wobei der genannte elastische Kopf (76) so geformt ist, dass er eine Schnappkupplung mit dem genannten Befestigungssitz (12) herstellen kann.

12. Die Kotflügeleinheit (4) nach Anspruch 10 oder 11, wobei der elastische Kopf (76) elastisch verformbare erste Rippen (80) zur Befestigung des elastischen Kopfes (76) an entsprechenden Löchern (84) umfasst, die an der Stützstange (16) ausgebildet sind.

13. Die Kotflügeleinheit (4) nach Anspruch 10, 11 oder 12, wobei der genannte elastische Kopf (76) elastisch verformbare zweite Rippen (88) für die Hinterschneidungs-Verriegelung (*undercut locking*) des elastischen Kopfes (76) auf einer Grundplatte (92) des Kotflügels (8) umfasst, die den genannten Befestigungssitz (12) begrenzt.

## Revendications

1. Unité de garde-boue (4) comprenant :
- un garde-boue (8) ayant la forme d'un arc d'un cercle autour d'un axe transversal (X-X), parallèle à une épaisseur ou profondeur d'une roue de véhicule associée,
- le garde-boue (8) ayant au moins un siège de fixation (12), creux et parallèle audit axe transversal (X-X),
- au moins une tige de support (16), parallèle audit axe transversal (X-X), et au moins partiellement logée dans ledit siège de fixation (12),
- la tige de support (16) s'étendant d'une extrémité distale (20), à laquelle elle est fixée au garde-boue (8), jusqu'à une extrémité proximale (24) à laquelle elle est fixée au châssis d'un véhicule associé,
- dans laquelle, à l'extrémité proximale (24), est prévu un boulon (28) ayant une tête (32) et une douille filetée (36) pour la fixation à un trou dans le châssis d'un véhicule associable,
- dans laquelle une rondelle de blocage (40) est solidairement associée à la tête (32) du boulon (32) ayant un corps circulaire (44) pourvu d'au moins un appendice (48) qui vient en prise sur une fente correspondante (52) sur l'extrémité proximale (24) de la tige de support (16), de manière à relier solidement le boulon (28) et l'extrémité proximale (24) l'un(e) à l'autre,
dans laquelle une base de fixation (60) à un châssis de véhicule associable dotée d'un trou traversant (64) pour la douille filetée (36) du boulon (28) et au moins une douille de blocage (68), est reliée à la douille filetée (36) du boulon (28), à l'opposé de la tête (32),
dans laquelle la tige de support (16), du côté d'extrémité proximale (24), est réunie à au moins une nervure de renfort (72), dirigée radialement par rapport au boulon (28),
dans laquelle ladite nervure de renfort (72) est soudée à la tige de support (16) et à une base de fixation (60) du boulon (28), doté d'un trou traversant (64) traversant la douille filetée (36) du boulon (28).

2. Unité de garde-boue (4) selon la revendication 1, dans laquelle l'accouplement entre l'au moins un appendice (48) et la fente correspondante (52) est un accouplement de verrouillage.

3. Unité de garde-boue (4) selon la revendication 1 ou 2, dans laquelle ledit au moins un appendice (48) comprend une extension radiale prédominante par rapport au corps circulaire (44) de la rondelle de blocage (40).

4. Unité de garde-boue (4) selon la revendication 1, 2 ou 3, dans laquelle ladite fente (52) est réalisée sur une partie avant (56) de l'extrémité proximale (24) de la tige de support (16).

5. Unité de garde-boue (4) selon la revendication 1, 2, 3 ou 4, dans laquelle ladite rondelle de blocage (40) comprend une pluralité d'appendices (48) qui viennent en prise par verrouillage dans les fentes correspondantes (52) de l'extrémité proximale (24).

6. Unité de garde-boue (4) selon l'une quelconque des revendications 1 à 5, dans laquelle ledit boulon (28) et ladite rondelle de blocage (40) sont en fer ou en acier.

7. Unité de garde-boue (4) selon l'une quelconque des revendications 1 à 6, dans laquelle ledit boulon (28) et ladite rondelle de blocage (40) sont soudés l'un(e) à l'autre.

8. Unité de garde-boue (4) selon l'une quelconque des revendications 1 à 7, dans laquelle ladite tige de support (16) est réalisée en aluminium ou en un alliage de celui-ci.

9. Unité de garde-boue (4) selon l'une quelconque des revendications précédentes, dans laquelle ladite au moins une nervure de renfort (72) est alignée par rapport audit au moins un appendice (48).

10. Unité de garde-boue (4) selon l'une quelconque des revendications 1 à 9, dans laquelle la tige de support (16), au niveau de ladite extrémité distale (20), comprend une tête élastique (76), élastiquement déformable de manière à réaliser un accouplement de forme avec le siège de fixation (12) du garde-boue (8).

11. Unité de garde-boue (4) selon la revendication 10, dans laquelle ladite tête élastique (76) est conformée de manière à réaliser un couplage par encliquetage avec ledit siège de fixation (12).

12. Unité de garde-boue (4) selon la revendication 10 ou 11, dans laquelle la tête élastique (76) comprend des premières ailettes (80) élastiquement déformables pour fixer la tête élastique (76) sur des trous relatifs (84) réalisés sur la tige de support (16).

13. Unité de garde-boue (4) selon la revendication 10, 11 ou 12, dans laquelle ladite tête élastique (76) comprend des secondes ailettes (88) élastiquement déformables pour le verrouillage en contre-dépouille de la tête élastique (76) sur une plaque de base (92) du garde-boue (8) délimitant ledit siège de fixation (12).
